# EUROPEAN PATENT APPLICATION

(11) **EP 4 657 710 A1**
(43) Date of publication of application: **03.12.2025**
(21) Application number: 25177170.5
(22) Date of filing: 19.05.2025
(51) Int. Cl.: H02J 7/02, H02J 9/06, H02M 1/10, H02M 7/219

(54) **POWER SUPPLY DEVICE, SYSTEM, AND METHOD**

(30) Priority: 31.05.2024 TW 113120132
(71) Applicant: DELTA ELECTRONICS, INC., Taoyuan City 320023 (TW)
(72) Inventor: LIN, Hung Chieh, Taoyuan City 320023 (TW); HSIEH, Yi Ping, Taoyuan City 320023 (TW); HUANG, Jin Zhong, Taoyuan City 320023 (TW); HUANG, Hung Yu, Taoyuan City 320023 (TW)
(74) Representative: Keil & Schaafhausen Patentanwälte PartGmbB

(57) **Abstract**

A power supply device (20), system (70), and method (80) are used to provide backup DC power when the utility power is abnormal. The power supply device includes two selectors (21) selectively electrically connected to an AC port or a DC port, a first end of each of two inductors (22) electrically connected to one of the two selectors, a full-bridge circuit (23) including two switch-series-connection portions (231a), each switch-series-connection portion electrically connected to a second end of one of the two inductors, a voltage regulation module (24) electrically connected between the second ends of the two inductors, and a controller (25) configured to control the two selectors to electrically connect the two DC terminals and enable the voltage regulation module to form a conductive path between the two inductors according to an operation command instructing the utility power in an abnormal state.

## Description

### CROSS REFERENCE TO RELATED APPLICATIONS

This application claims the priority of Taiwan Patent Applications No. 113120132, titled "POWER SUPPLY DEVICE, SYSTEM, AND METHOD," filed on May 31, 2024, the disclosures of which are incorporated herein by reference.

### FIELD OF THE INVENTION

The present disclosure relates to the technical field of power conversion, specifically to a power supply device, system, and method.

### BACKGROUND OF THE INVENTION

In observation of power supply devices, uninterruptible power supply systems (UPS) are used to supply power continuously to critical electronic devices or precision instruments to prevent data loss, communication interruption, or instrument loss of control. For example, an uninterruptible power supply system can provide rectified direct current (DC) power to a load when the utility power is normal, and a battery can supply stored DC power to the load when the utility power (also referred to as the Mains power) is abnormal.

Although there have been some power-supply technical solutions in the past, they still need to be improved.

### SUMMARY OF THE INVENTION

An object of the present disclosure is to provide a power supply device, system, and method to reduce the number of components used in a circuit effectively.

To achieve the above object, one aspect of the present disclosure provides a power supply device, which includes two selectors selectively electrically connected to an alternative current (AC) port or a direct current (DC) port to transmit AC power or DC power; two inductors, wherein a first end of each of the two inductors is electrically connected to one of the two selectors; a full-bridge circuit comprising two switch-series-connection portions, each switch-series-connection portion is electrically connected to a second end of one of the two inductors; a voltage regulation module electrically connected between the second ends of the two inductors; and a controller electrically connected to the two selectors, the full-bridge circuit, and the voltage regulation module, wherein the controller is configured to control the two selectors to be electrically connected to the DC port and to enable the voltage regulation module to form a conductive path between the two inductors according to an operation command indicating the AC power in a power abnormality state.

To achieve the above object, another aspect of the present disclosure provides a power supply system, which includes three power supply devices, wherein each of the three power supply devices comprises two selectors, two inductors, and a full-bridge circuit, the two selectors are selectively electrically connected to an alternative current (AC) port or a direct current (DC) port to transmit AC power or DC power, a first end of each of the two inductors is electrically connected to one of the two selectors, the full-bridge circuit includes two switch-series-connection portions, each switch-series-connection portion is electrically connected to a second end of one of the two inductors, the full-bridge circuits of the three power supply devices are connected to each other in parallel, and at least one of the three power supply devices is configured to be a voltage-regulated power supply device, in which a voltage regulation module is electrically connected between the second ends of the two inductors; and a controller electrically connected to the two selectors, the full-bridge circuit, and the voltage regulation module, wherein the controller is configured to control the two selectors of the voltage-regulated power supply device to be electrically connected to the DC port and to enable the voltage regulation module of the voltage-regulated power supply device to form a conductive path between the two inductors according to an operation command indicating the AC power in a power abnormality state.

To achieve the above object, another aspect of the present disclosure provides a power supply method applied to a power supply device that includes two selectors, two inductors, a full-bridge circuit, a voltage regulation module, and a controller, wherein the two selectors are selectively electrically connected to an AC port or a DC port to transmit AC power or DC power, a first end of each of the two inductors is electrically connected to one of the two selectors, the full-bridge circuit includes two switch-series-connection portions, each switch-series-connection portion is electrically connected to a second end of one of the two inductors, the voltage regulation module is electrically connected between the second ends of the two inductors, and the controller is electrically connected to the two selectors, the full-bridge circuit, and the voltage regulation module, wherein the power supply method includes configuring the controller to control the two selectors to be electrically connected to the DC port and to enable the voltage regulation module to form a conductive path between the two inductors according to an operation command indicating the AC power in a power abnormality state.

In the present disclosure, the power supply device, system, and method are provided, in which the first end of each of the two inductors is electrically connected to one of the two selectors, the two switch-series-connection portions of the full-bridge circuit are electrically connected to the second ends of the two inductors, the voltage regulation module is electrically connected between the second ends of the two inductors, and the controller is electrically connected to the two selectors, the voltage regulation module, and the full-bridge circuit, wherein the controller is configured to control the two selectors to be electrically connected to the DC port and to enable the voltage regulation module to form a conductive path between the two inductors according to the operation command indicating the AC power in the power abnormality state. Therefore, AC power is used to supply power when the utility power is normal, and backup DC power is provided when the utility power is abnormal. The two inductors store electric energy first and then release electric energy, which can increase the output voltage and charge the battery in reverse. Thus, in addition to supplying power uninterruptedly, using the same circuit to convert AC or DC power into a power source can also effectively reduce the number of components used in the circuit.

### BRIEF DESCRIPTION OF THE DRAWINGS

FIG. 1 is a schematic diagram illustrating a circuit of an uninterruptible power supply system associated with the present disclosure.
FIGs. 2A to 2C are schematic diagrams illustrating circuits of power supply devices provided in embodiments of the present disclosure.
FIGs. 3A and 3B are schematic diagrams illustrating currents associated with the power supply device, as shown in FIG. 2A, operating in a DC mode.
FIGS. 4A and 4B are schematic diagrams illustrating currents operated in the DC mode associated with a battery in FIG. 2A has been changed into a three-wire architecture with a common neutral point.
FIG. 5A is a schematic diagram illustrating a circuit of a power supply device provided in another embodiment of the present disclosure.
FIGs. 5B and 5C are schematic diagrams illustrating currents associated with the power supply device, as shown in FIG. 5A, operating in the DC mode.
FIGs. 6A to 6D are schematic diagrams illustrating currents associated with the power supply device, as shown in FIG. 2A, operating in an AC mode.
FIG. 6E is a schematic diagram illustrating signals associated with the power supply device, operating in an interleaved-control mode, provided in embodiments of the present disclosure.
FIGs. 7A and 7B are schematic diagrams illustrating circuits of power supply systems provided in embodiments of the present disclosure.
FIG. 8 is a schematic flowchart illustrating a power supply method provided in an embodiment of the present disclosure.

### THE DETAILED DESCRIPTION OF PREFERRED EMBODIMENTS

Preferred embodiments of the present disclosure will be described in detail below, along with the accompanying drawings, to make the above and other objects, features, and advantages of the present disclosure more apparent and understandable.

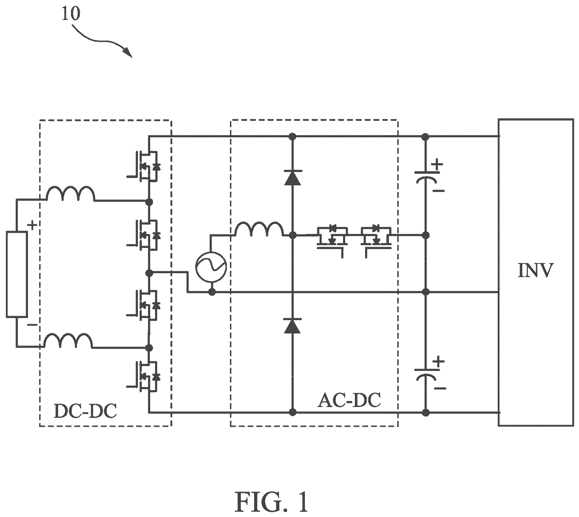

In observation of power supply devices, uninterruptible power supply systems (UPS) are used to supply power continuously to critical electronic devices or precision instruments. As shown in FIG. 1, an uninterruptible power supply system 10 includes a direct current converter (DC-DC), a power factor correction (PFC) rectifier (AC-DC), and an inverter (INV). DC energy converted by the direct current converter or AC energy rectified by the PFC rectifier is outputted to a bus, and then the inverter outputs electric energy to a load. When commercial power is supplied normally, the PFC rectifier rectifies the AC power from a commercial power provider to establish a bus voltage and output power to the load. When the utility power is supplied abnormally, the DC converter converts the DC power from a battery to establish the bus voltage and output the power to the load. Suppose the uninterruptible power supply system uses two sets of converters to provide power. In that case, the whole circuit requires a greater number of components, resulting in low component usage, high cost, and a bulky size.

In another aspect, the present disclosure provides a power supply device that can be used as an uninterruptible power supply system and reduce the number of components required in a circuit. Examples are provided as follows but are not limited to the description here.

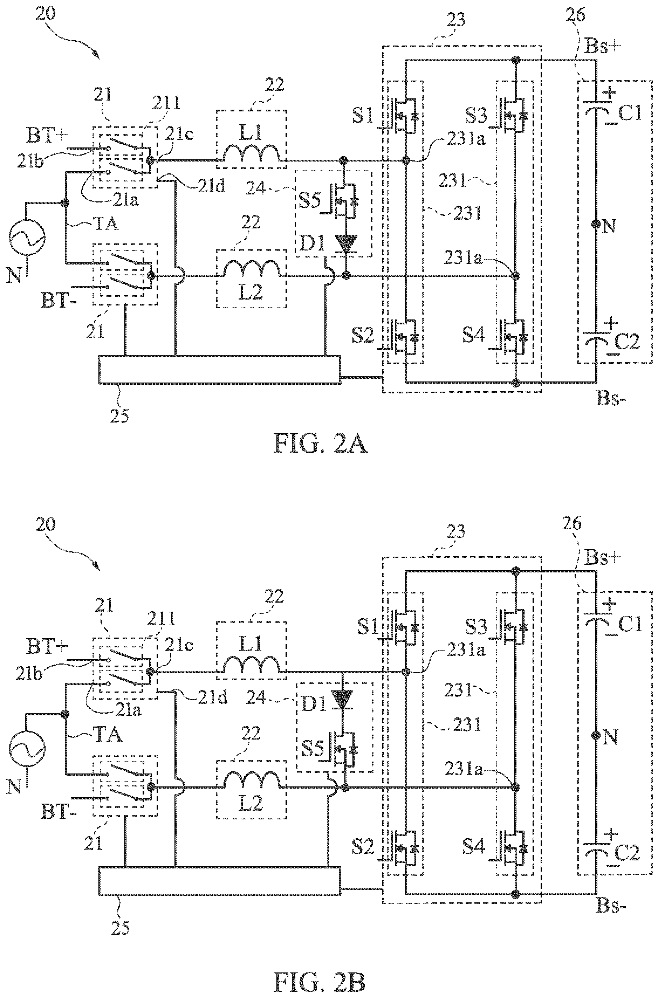

For example, as shown in FIG. 2A, a power supply device 20 includes two selectors 21, two inductors 22, a full-bridge circuit 23, a voltage regulation module 24, and a controller 25. The two selectors 21 are selectively electrically connected to an AC port (such as one AC terminal TA being shown as an example here) or a DC port (such as two DC terminals BT+ and BT- being shown as an example here). The AC terminal TA and the two DC terminals BT+ and BT- can be configured with an appropriate number of conductive wires to transmit AC power and backup DC power, respectively. A first end of each of the two inductors 22 is electrically connected to one of the two selectors 21. The full-bridge circuit 23 includes two switch-series-connection portions. Each switch-series-connection portion is electrically connected to a second end of one of the two inductors 22. The voltage regulation module 24 is electrically connected between the second ends of the two inductors 22. The controller 25 is electrically connected to the two selectors 21, the full-bridge circuit 23, and the voltage regulation module 24 to execute in an AC mode or a DC mode, wherein the controller 25 is configured to control the two selectors 21 to be electrically connected to the two DC terminals BT+ and BT+ of the DC port and to enable the voltage regulation module 24 to form a conductive path between the two inductors 22.

For example, as shown in FIG. 2A, each of the two selectors 21 can be an electronic component or a circuit with a many-to-one-selection function. The two selectors 21 can be controlled by the controller 25 to selectively switch to the AC terminal TA or the DC terminals BT+ and BT-. The AC terminal TA can transmit AC power, such as the AC terminal TA being electrically connected to the live wire of an AC power source (such as a commercial power connector). The two DC terminals BT+ and BT- can be used to transmit DC power, such as the two DC terminals BT+ and BT- being coupled to positive and negative poles of a DC power source (such as a rechargeable battery).

Optionally, in some embodiments, as shown in FIG. 2A, the two selectors 21 may be many-to-one-selection functional components, such as application-specific integrated circuits (ASICs). For example, each of the two selectors 21 has a first terminal 21a, a second terminal 21b, a third terminal 21c, and a selection terminal 21d. The first terminals 21a of each of the two selectors 21 is electrically connected to the AC terminal TA of the AC port. The second terminal 21b of each of the two selectors 21 is electrically connected to one of the two DC terminals BT+ and BT-. The third terminal 21c of each of the two selectors 21 is electrically connected to one of the two inductors 22. The selection terminal 21d of each of the two selectors 21 is electrically connected to the controller 25. For example, the controller 25 can output a first selection command (such as a logic "0") to the selection terminal 21d so that the first terminal 21a and the third terminal 21c can be connected to deliver an AC signal in association with the AC terminal TA. Also, the controller 25 can output a second selection command (such as a logic "1") to the selection terminal 21d so that the second terminal 21b and the third terminal 21c can be connected to deliver a DC signal in association with the DC terminals BT+ and BT-

Optionally, in some embodiments, as shown in FIG. 2A, the two selectors 21 may be a many-to-one-selection combination circuit. For example, each selector 21 includes two switching units 211, such as relays or silicon-controlled rectifiers. In each selector 21, each of the two switching units 211 has an input terminal, an output terminal, and a control terminal. The input terminals of the two switching units 211 are electrically connected to one of the two DC terminals BT+ and BT- and the AC terminal TA, respectively. The output terminals of the two switching units 211 are jointly electrically connected to one of the two inductors 22. The control terminals of the two switching units 211 are electrically connected to the controller 25 in an invert-phased manner.

For example, as shown in FIG. 2A, taking relays as an example, a buffer (if a logic "1"/"0" is inputted, then a logic "1"/"0" is outputted, respectively) can be provided between the controller 25 and the control terminal of one switching units 211, and an inverter (if a logic "1"/"0" is inputted, then a logic "0"/"1" is outputted, respectively) can be provided between the controller 25 and the control terminal of the other switching unit 211 so that switching actions (in switches) of the two switching units 211 are mutually exclusive. Namely, the same control command causes one switching unit 211 to be turned on ("ON") and the other switching unit 211 to be turned off ("OFF"). For example, the controller 25 outputs the first switching command (such as the logic "0") to the two switching units 211 so that the AC signal in association with the AC terminal TA is transmitted to the two inductors 22. In addition, the controller 25 outputs a second switching command (such as logic "1") to the two switching units 211 so that the DC signal in association with the DC terminals BT+ and BT- is transmitted to the two inductors 22.

For example, as shown in FIG. 2A, the two inductors 22 can be designed in appropriate specifications according to the power transmission requirements. Each inductor 22 is electrically connected between one selector 21 and the full-bridge circuit 23 to facilitate the transmission of current from AC power or DC power to the full-bridge circuit 23 and its subsequent-stage circuits.

For example, as shown in FIG. 2A, the full-bridge circuit 23 includes two switch-series-connection portions. For example, the full-bridge circuit 23 includes two switch assemblies 231 connected in parallel. For example, a first switch assembly 231 includes two switches S1 and S2 connected in series and a series-connection portion 231a (i.e., the first switch-series-connection portion). In addition, a second switch assembly 231 includes two switches S3 and S4 connected in series and a series-connection portion 231a (i.e., the second switch-series-connection portion). The series-connection portion 231a of each switch assembly 231 is electrically connected to the second terminal of one of the two inductors 22.

For example, as shown in FIG. 2A, the voltage regulation module 24 may be a component or circuit capable of cooperatively regulating an internal voltage in a circuit. For example, the voltage regulation module 24 is electrically connected between the second ends of the two inductors 22. Two ends of the voltage regulation module 24 can be controlled by the controller 25 to form an open circuit state so that the two inductors 22 on both sides of the voltage regulation module 24 and the full-bridge circuit 23 can transmit electric energy to each other. The two ends of the voltage regulation module 24 can be enabled by the controller 25 to form a conductive state, causing the two inductors 22 on both sides of the voltage regulation module 24 to conduct electric energy to each other and further causing the two DC terminals BT+ and BT- (coupled to the positive and negative electrodes of the battery), the two inductors 22, and the voltage regulation module 24 form a current loop, to allow the electrical energy between the battery and the inductors 22 to communicate with each other.

For example, as shown in FIG. 2A, the voltage regulation module 24 can be a switching element (such as a transistor, a contact switch, or a semiconductor switch) or a logic circuit including a switching element and a unidirectional element (such as formed by adopting a diode directly or suitably configuring a transistor). The voltage regulation module 24 is electrically connected between the two inductors 22, and the controller 25 is configured to enable the voltage regulation module 24 to form the conductive path between the two inductors 22.

Optionally, in some embodiments, as shown in FIG. 2A, the voltage regulation module 24 may include a switching element S5 and a unidirectional element D1. The switching element S5 and the unidirectional element D1 are connected in series between the two inductors 22. For example, the switching element S5 is electrically connected to the inductor 22 (e.g., L1), and the unidirectional element D1 is electrically connected to the inductor 22 (e.g., L2), as shown in FIG. 2A. Alternatively, the unidirectional element D1 is electrically connected to the inductor 22 (e.g., L1), and the switching element S5 is electrically connected to the inductor 22 (e.g., L2), as shown in FIG. 2B. The controller 25 is configured to control the switching element S5 to form the conductive path between the two inductors 22.

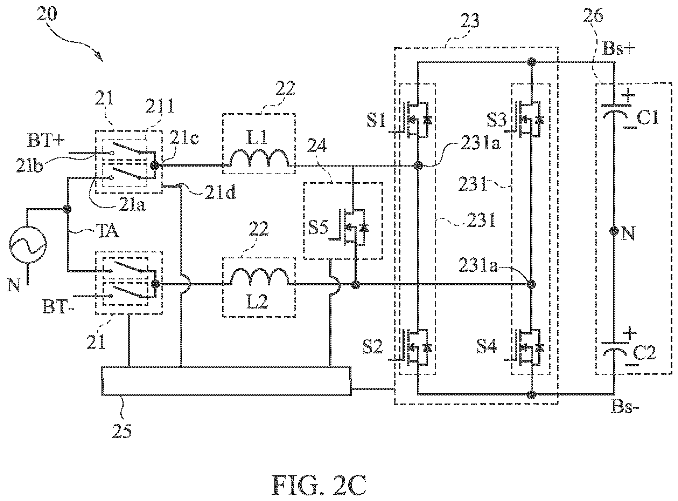

Optionally, in some embodiments, as shown in FIG. 2C, the voltage regulation module 24 may only include one switching element S5. The switching element S5 is electrically connected between the two inductors 22, and the controller 25 is configured to control the switching element S5 to form the conductive path between the two inductors 22.

For example, as shown in FIG. 2A, the controller 25 can be a microcontroller or a programmable logic controller. The controller 25 can be configured according to internal logic or external commands to generate signals based on different operation modes to control internal components of the power supply device 20 (such as switches, switching elements, or switching units), allowing the power supply device 20 to operate in different operation modes. Examples are given below but are not limited to the description here.

The following examples illustrate scenarios of the power supply device of the present disclosure operated in a DC mode but are not limited to the description here.

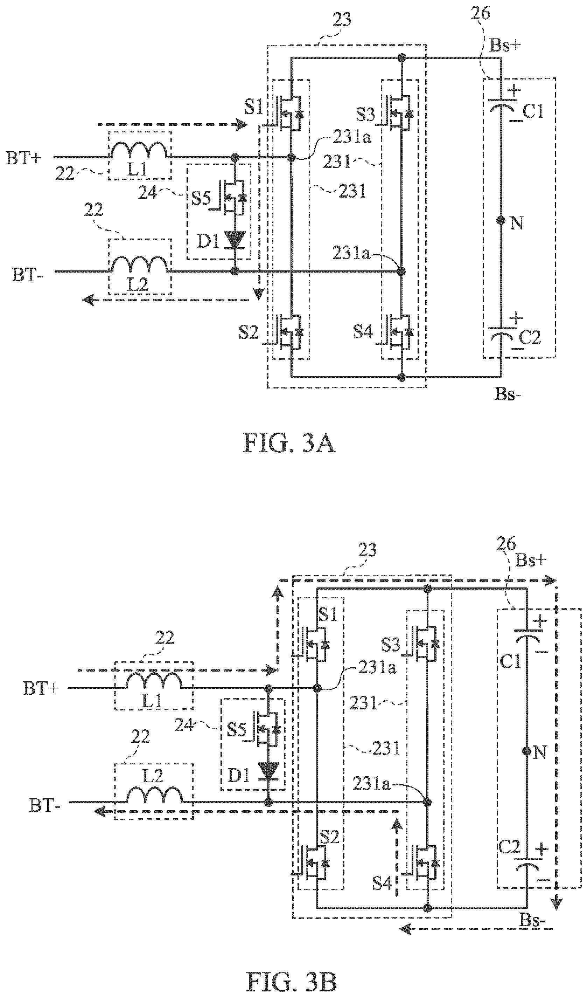

In some embodiments, as shown in FIGs. 2A and 3A, for example, the operation command can be input to the controller 25 by an external device or generated internally by the controller 25. The operation command can be one of several signal states used to instruct different operation modes. For example, when the utility power is abnormal, sensed AC power characteristics are compared with stored normal power characteristics. Suppose a difference is greater than or equal to a threshold. In that case, a digital signal is generated to indicate that the AC power is in an abnormal power-supply state, and backup DC power is used instead. For example, according to the operation command indicating that the AC power is in an abnormal power-supply state, the controller 25 is configured to control the two selectors 21 to be electrically connected to the two DC terminals BT+ and BT- and to enable the voltage regulation module 24 to form a conductive path between the two inductors 22. For example, the controller 25 is configured to control the two selectors 21 to be switched from being electrically connected to the AC terminal TA to being electrically connected to the two DC terminals BT+ and BT-, and the controller 25 is configured to enable the voltage regulation module 24 to be in a conductive state between two ends thereof and to control the full-bridge circuit 23 to be in a disabled state, to make the two DC terminals BT+ and BT-, the two inductors 22, and the voltage regulation module 22 collaboratively form a current path.

For example, as shown in FIGs. 2A and 3A, when an abnormality of the utility power (such as a power outage or instability) is detected, the controller 25 can be configured in a DC energy storage mode. For example, using a commercial power status detector, when a case in which the utility power (such as power) is abnormal is detected, an abnormal-indication command (such as a digital signal "0xFF" but not limited to the description here) can be sent to the controller 25. If the controller 25 receives the abnormal-indication command, the controller 25 controls the two selectors 21 to be switched from being electrically connected to the AC terminal TA to being electrically connected to the two DC terminals BT+ and BT- and controls the switching element S5 of the voltage regulation module 24 to be turned on (ON) so that the two DC terminals BT+ and BT-, the two inductors 22, and the switching element S5 and the unidirectional element D1 of the voltage regulation module 24 collaboratively form the current loop, in which the DC power provided from the two DC terminals BT+ and BT- can be stored in the two inductors 22. Meanwhile, the controller 25 can further control the switches S1 to S4 of the full-bridge circuit 23 to be turned off (OFF).

In some embodiments, as shown in FIGs. 2A and 3B, the full-bridge circuit 23 is connected in parallel with a capacitor module 26. For example, two switch assemblies 231 of the full-bridge circuit 23 are connected in parallel with the capacitor module 26. The controller 25 is configured to control two selectors 21 to be electrically connected to the two DC terminals BT+ and BT-. The controller 25 is further configured to control the voltage regulation module 24 to be in an open-circuit state between two ends thereof. The controller 25 is further configured to control two selected switches (such as S1 and S4) that are connected between the capacitor module 26 and the two inductors 22 to be in the conductive state so that the two DC terminals BT+ and BT-, the two inductors 22, the two selected switches (such as S1 and S4), and the capacitor module 26 collaboratively form a current path.

For example, after electric energy is stored in the inductors (for example, after a specific period), as shown in FIGs. 2A and 3B, the controller 25 can be further configured in a DC energy release mode. For example, the controller 25 controls the two selectors 21 to be switched to electrically connect to the two DC terminals BT+ and BT-, the switching element S5 of the voltage regulation module 24 to be turned off, and the switches S1 and S4 to be turned on and the switches S2 and S3 to be turned off in the full-bridge circuit 23 so that the two DC terminals BT+ and BT-, the two inductors 22, the switches S1 and S4 of the full-bridge circuit 23, and the two capacitors C1 and C2 of the capacitor module 26 collaboratively form the current loop. Thus, the DC power provided from the two DC terminals BT+ and BT- and the current continuously provided by the two inductors 22 release electric energy to the two capacitors C1 and C2 via the switches S1 and S4 to establish a bus voltage (such as potentials Bs+ and Bs- shown in FIG. 3B). In this way, electric energy is stored in the inductors and then released from the inductors using the voltage regulation module. The current provided to the capacitor module can be increased to boost the output voltage.

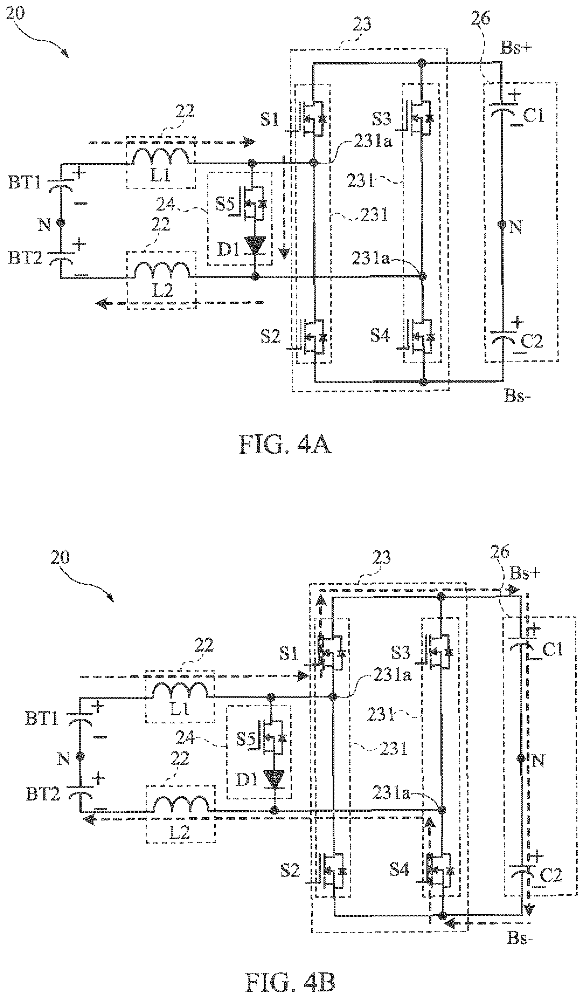

In some embodiments, as shown in FIG. 4A, a battery with a three-wired architecture provided with a common neutral point can be used. For example, the battery includes several cells (such as BT1 and BT2), and there is a neutral point between the several cells BT1 and BT2 of the battery. N. The full-bridge circuit 23 is connected in parallel with a capacitor module 26. For example, two switch assemblies 231 of the full-bridge circuit 23 are connected in parallel with the capacitor module 26. The capacitor module 26 has two capacitors, C1 and C2, and a neutral point N. The neutral point N of the battery is electrically connected to the neutral point N of the capacitor module 26. Therefore, the power supply device can use batteries from different architectures as a DC power supply source.

For example, as shown in FIG. 4A, when an abnormality of the utility power (such as a power outage or instability) is detected, the controller (please refer to "25" shown in FIG. 2A) can be configured in the DC energy storage mode. For example, the controller controls the two selectors (please refer to "21" shown in FIG. 2A) to be switched to electrically connect to the battery cells BT1 and BT2 and controls the switching element S5 of the voltage regulation module 24 to be turned on so that the cells BT1 and BT2 of the battery, the two inductors 22, and the component S5 and the unidirectional component D1 of the voltage regulation module 24 collaboratively form the current loop. The DC power provided by the cells BT1 and BT2 of the battery can store electric energy in the two inductors 22. Meanwhile, the controller can further control the switches S1 to S4 of the full-bridge circuit 23 to be turned off (OFF).

For example, after electric energy is stored in the inductors, as shown in FIG. 4B, the controller (please refer to "25" shown in FIG. 2A) can be further configured in the DC energy release mode. For example, the controller controls the two selectors (please refer to "21" shown in FIG. 2A) to be switched to electrically connected to the cells BT1 and BT2 of the battery via the two DC terminals, the controller controls the switching element S5 of the voltage regulation module 24 to be turned off, and the controller controls the switches S1 and S4 to be turned on and the switches S2 and S3 to be turned off, in the full-bridge circuit 23 so that the cells BT1 and BT2 of the battery, the two inductors 22, the switches S1 and S4 of the full-bridge circuit 23, and the two capacitors C1 and C2 of the capacitor module 26 collaboratively form a current loop. Thus, the DC power provided by the cells BT1 and BT2 of the battery and the current continuously provided by the two inductors 22 release electric energy to the two capacitors C1 and C2 via the switches S1 and S4 to establish the bus voltage (such as Bs+ and Bs- shown in FIG. 4B). In this way, electric energy is stored in the inductors and then released from the inductors using the voltage regulation module. The current provided to the capacitor module can be increased to boost the output voltage.

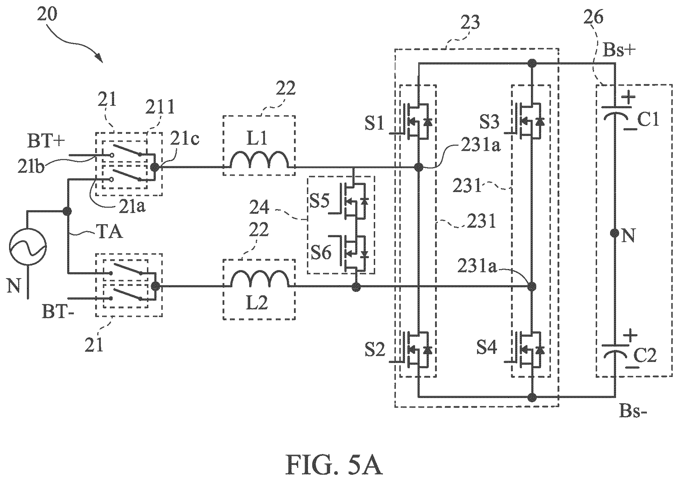

Optionally, in some embodiments, as shown in FIG. 5A, a bidirectional circuit is shown, in which the voltage regulation module 24 may further include two switching elements S5 and S6. The two switching elements S5 and S6 are connected in series between the two inductors 22. For example, the two switching elements S5 and S6 are connected in reverse docking according to current directions of internal equivalent diodes. The controller (please refer to "25" shown in FIG. 2A) is configured to control the two switching elements S5 and S6 to form a conductive path between the two inductors 22.

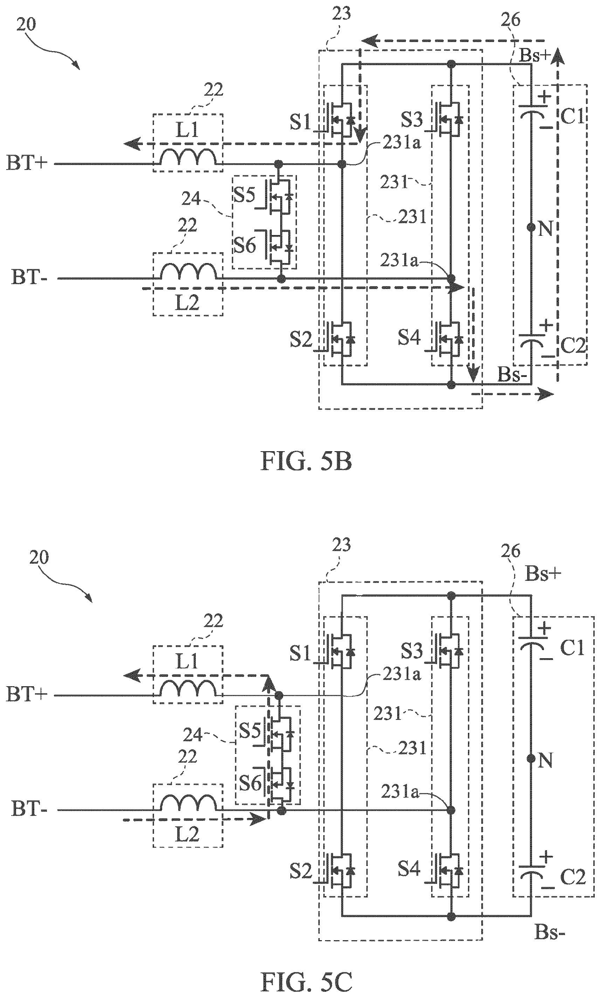

For example, as shown in FIG. 5B, the controller (please refer to "25" shown in FIG. 2A) can be further configured in a reverse energy-storage mode. For example, the controller controls the two selectors (please refer to "21" shown in FIG. 2A) to be switched to electrically connect to the two DC terminals, BT+ and BT+, controls the switching elements S5 and S6 to be turned off, and controls the switches S1 and S4 to be turned on and switches S2 and S3 to be turned off, in the full-bridge circuit 23 so that the two DC terminals BT+ and BT-, the two inductors 22, the switches S1 and S4 of the full-bridge circuit 23, and the capacitors C1 and C2 of the capacitor module 26 collaboratively form a current loop. Thus, the DC power provided by the capacitors C1 and C2 of the capacitor module 26 can store electric energy in the two inductors 22 and charge the battery between the two DC terminals BT+ and BT-. In this way, when battery power is low, if the capacitor module supplies power to the subsequent circuit or load and there is remaining power, the capacitor module can store electric energy in the battery during a gap between periods of supplying power to facilitate the subsequent requirements for supplying DC power.

For example, after the reverse energy-storage mode is performed, as shown in FIG. 5C, the controller (please refer to "25" shown in FIG. 2A) can be further configured to a reverse charging mode. For example, the controller controls the two selectors (please refer to "21" shown in FIG. 2A) to be switched to electrically connect to the two DC terminals BT+ and BT-of the battery and controls the switching element S6 of the voltage regulation module 24 to be turned on (the switching element S5 is configured to have a synchronous rectification function) so that the two DC terminals BT+ and BT-, the two inductors 22, and the switching elements S5 and S6 of the voltage regulation module 24 collaboratively form a current loop. Thus, the two inductors 22 can release power to (charge) the battery between the two DC terminals BT+ and BT-. Meanwhile, the controller can further control the switches S1 to S4 of the full-bridge circuit 23 to be turned off (OFF). In this way, when the battery power is low, the electric energy of the inductors can be recharged to the battery to facilitate subsequent requirements for supplying DC power.

The following examples illustrate scenarios of the power supply device of the present disclosure operated in an AC mode but are not limited to the description here.

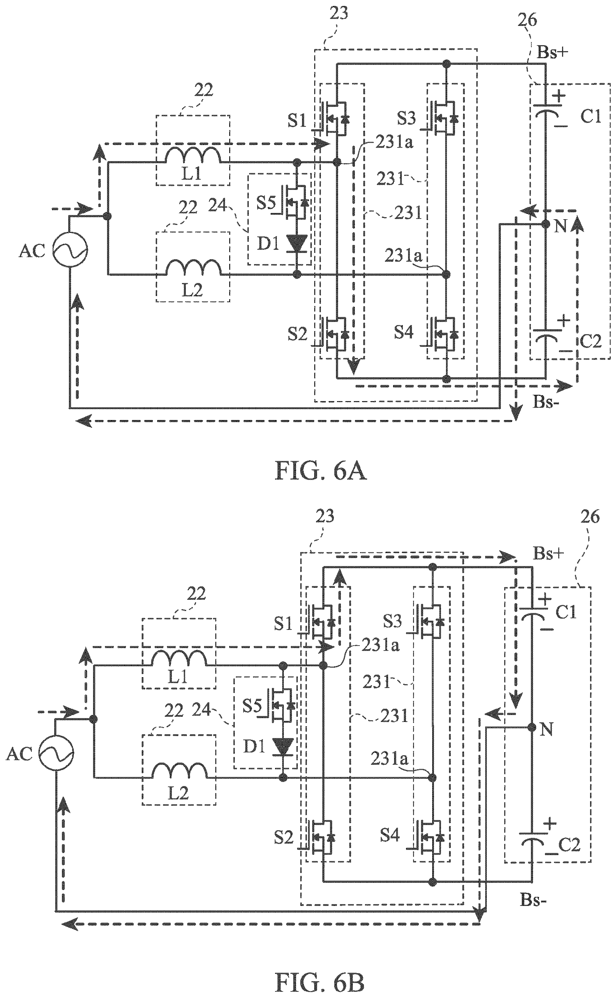

In some embodiments, as shown in FIGs. 6A to 6D, when the utility power AC is normal (such as changing from the abnormal power-supply state to a power restoration state or being a preset power-supply state before the abnormal power-supply state), for example, the sensed AC power characteristics compared with the stored normal power characteristics is used, if a difference is less than a threshold, then a digital signal is generated to indicate that the AC power is in a power restoration state or the preset power-supply state to be powered by the utility power AC. The full-bridge circuit 23 is connected in parallel with the capacitor module 26. For example, the two switch assemblies 231 of the full-bridge circuit 23 are connected in parallel with the capacitor module 26. The capacitor module 26 has two capacitors C1 and C2, and a neutral point N. According to an operation command indicating that the AC power is in the power restoration state or the preset power-supply state, the controller (not shown in this figure; please refer to FIG. 2A) is configured to control the two selectors (not shown in this figure; please refer to FIG. 2A) to be electrically connected to the AC terminal, and the controller is configured to control the voltage regulation module 24 to be in an open-circuit state between two ends thereof and to control a specific switch (such as S1, S2, S3 or S4) connected between the capacitor module 26 and one of the two inductors 22 to be in a conductive state so that the AC terminal of the AC port, the one of the two inductors 22 (such as L1 or L2), the specific switch, one of the two capacitors (such as C1 or C2), and the neutral point N collaboratively form a current path.

For example, as shown in FIGs. 6A to 6D, the voltage regulation module 24, which includes the switching element S5 and the unidirectional element D1, is taken as an example. When a case in which the utility power AC power is normal is detected, the controller (please refer to "25" shown in FIG. 2A) can be further configured in an AC input mode. For example, using a commercial power status detector, when the case in which the utility power AC power is normal is detected, a normal-instruction command can be sent (such as a digital signal "0x0F" indicating the preset power-supplying status or a digital signal "0xF0" indicating the power restoration state but not limited to the description here) to the controller. If the controller receives a normal-instruction command, the controller controls the two selectors (please refer to "21" shown in FIG. 2A) to be electrically connected to the AC terminal of the AC port to provide AC power to the subsequent circuit.

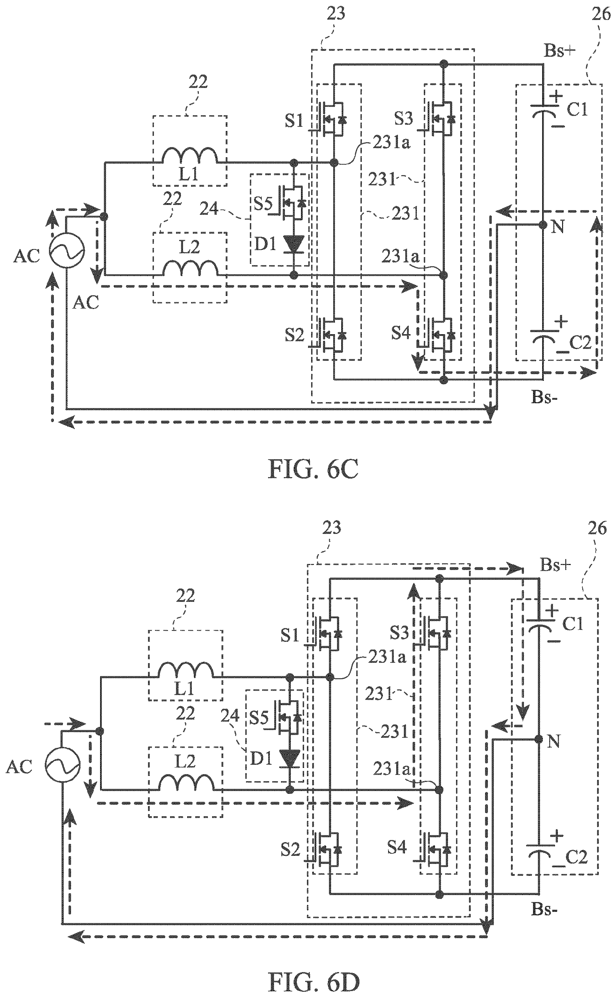

For example, an action mode when the AC power is input in a positive half cycle is taken as an example. As shown in FIG. 6A, the controller controls the switching element S5 of the voltage regulation module 24 to be turned off, the controller controls the switch S2 to be turned on and the switches S1, S3, and S4 to be turned off, in which the switch S1 is used as a synchronous rectification diode, and the AC power is used to store electric energy in the inductor 22 (such as L1). As shown in FIG. 6B, the controller controls the switch S1 to be turned on and the switches S2, S3, and S4 to be turned off. The current provided by the AC power and continuously provided by the inductor 22 (such as L1) release electric energy to the capacitor C1 through the switch S1. As shown in FIG. 6C, the controller controls the switch S4 to be turned on and the switches S1, S2, and S3 to be turned off, in which the switch S3 is used as a synchronous rectification diode. The AC power is used to store energy in the inductor 22 (such as L2). As shown in FIG. 6D, the controller controls the switch S3 to be turned on and the switches S1, S2, and S4 to be turned off. The current from the AC power and the current continuously provided by the inductor 22 (such as L2) release electric energy to the capacitor C1.

In this way, as shown in FIGs. 6A to 6D, the switches S1 to S4 can be respectively controlled by the controller to store electric energy in the inductor 22 (such as L1 or L2) during a positive half cycle of the AC power. Then, the current from the AC power and the current continuously provided by the inductor 22 (such as L1 or L2) release electric energy to the capacitor C1. By analogy, the controller can further control the switches S1 to S4 to store electric energy in the inductor 22 (such as L1 or L2) in a negative half cycle of the AC power. Then, the current from the AC power and the current continuously provided by the inductor 22 (such as L1 or L2) release electric energy to the capacitor C2. In addition, operations of the positive and negative half cycles of the AC power can be understood by those ordinarily skilled in the art related to the present disclosure, no more description is thus provided here. In this way, electric energy is stored in the inductors and then released from the inductors using the controller controlling different switches. Electric energy can be continuously provided to the capacitor module to transmit power to the subsequent circuits or loads.

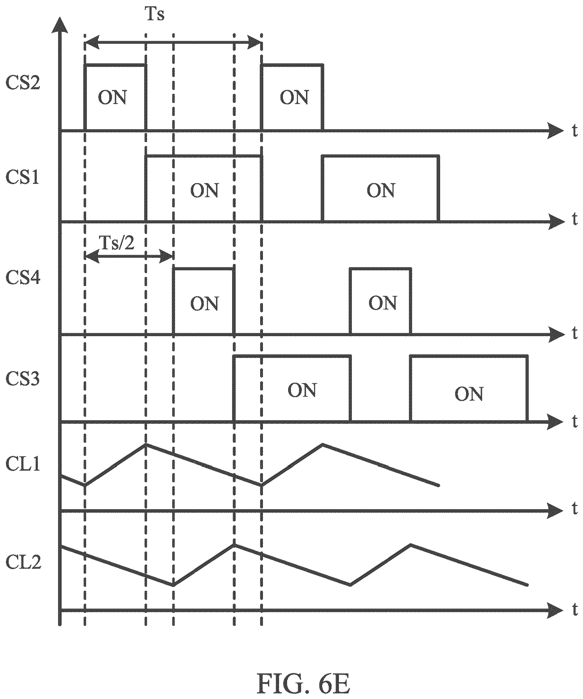

In some embodiments, the power supply device can be further operated in an interleaved-control mode, as shown in FIGs. 6A to 6E. During one cycle Ts of a pulse wave, signals CS2 and CS1 that control the switches S2 and S1 are two complementary signals, and signals CS4 and CS3 that control switches S4 and S3 are two complementary signals. For example, at moment t, one of the two complementary signals is high level (logic 1), and the other of the two complementary signals is low level. (logic 0) and vice versa. As shown in FIGs. 6A to 6E, the signals CS2 and CS4 may be operated in an interleaving manner. For example, the signals CS2 and CS4 differ by a half-period Ts/2 so that currents CL1 and CL2 of the two inductors are in an increment stage (from low to high) and a decrement stage (from high to low), respectively. For example, as shown in FIGs. 6A and 6E, when the signal CS2 is at a high level, the switch S2 is turned on, the inductor 22 (such as L1) stores electric energy, and the current CL1 is in the increment stage; as shown in FIGs. 6B and 6E, when the signal CS1 is at a high level, the switch S1 is turned on, the inductor 22 (such as L1) releases electric energy, and the current CL1 is in the decrement stage; as shown in FIGs. 6C and 6E, when the signal CS4 is at a high level, the switch S4 is turned on, the inductor 22 (such as L2) stores electric energy, and the current CL2 is in the increment stage; as shown in FIGs. 6D and 6E, when the signal CS3 is at a high level, the switch S3 is turned on, the inductor 22 (such as L2) releases electric energy, and the current CL2 is in the decrement stage. In this way, the voltage ripple of the two capacitors can be effectively reduced, reducing the overall circuit size. This circuit can be further used to input DC power, having advantages in size and cost.

The above-mentioned power supply device embodiments of the present disclosure use two selectors to switch a source power to AC power or DC power. Current paths of different configurations are formed by controlling different switches (such as those located in the full-bridge circuit and the voltage regulation module) to allow the inductors to store electric energy and then release electric energy to the capacitor module. The same circuit that converts AC or DC power into a power-supplying source can reduce the number of components used. If multiple power supply devices are used to supply power together, they can further power many electronic equipment, such as servers or communication devices. Multiple power supply systems are suitable for powering communication modules but are not limited to the description here. Embodiments of the power supply device of the present disclosure can be further extended to an architecture applied to input three-phase power, such as serving as an uninterruptible power supply system. Examples are provided as follows but not limited to the description here.

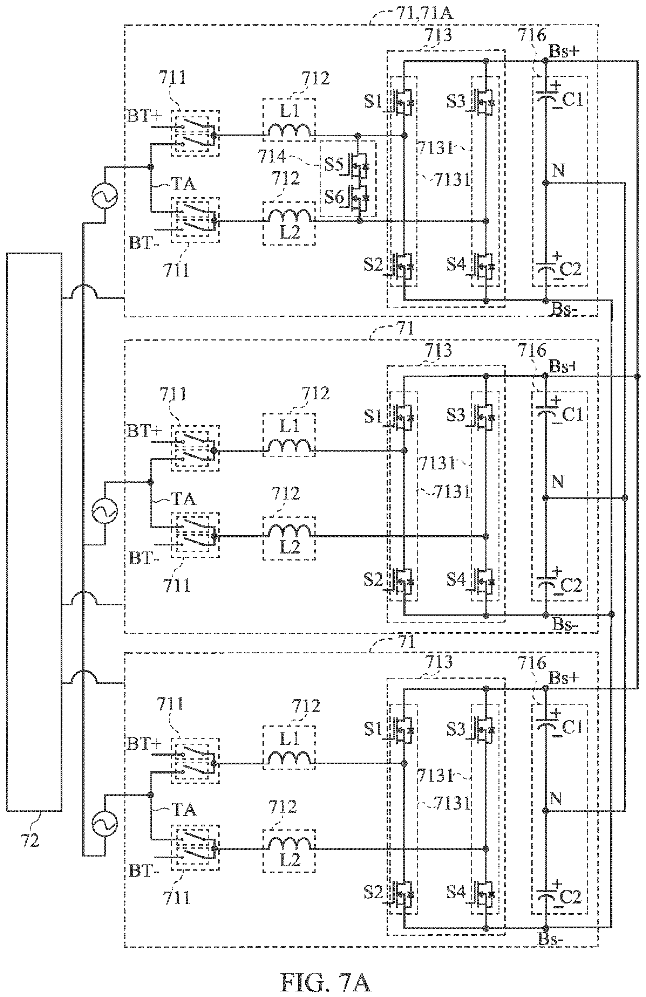

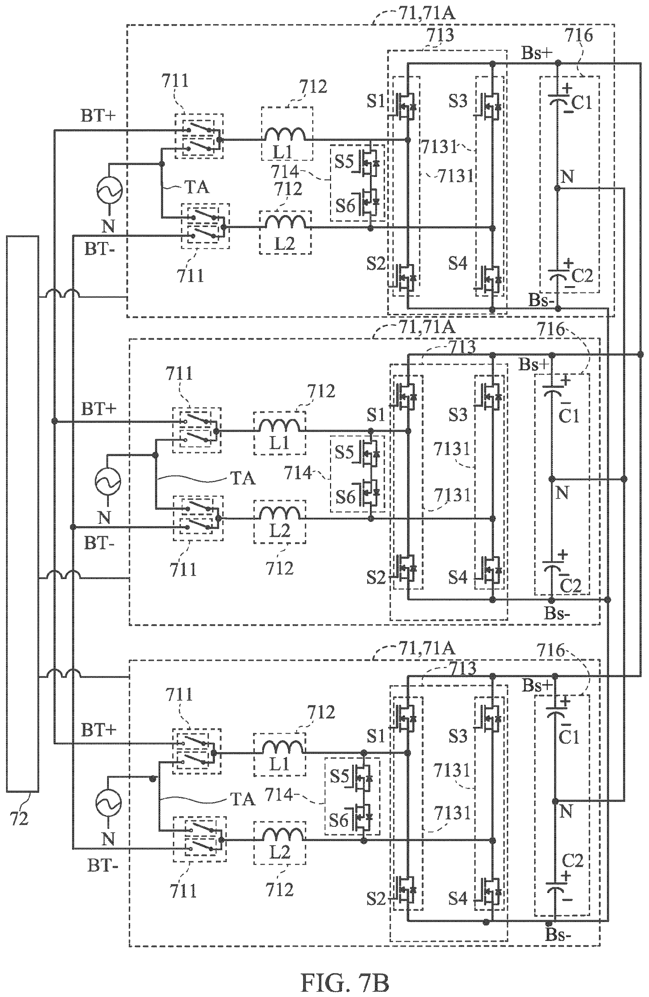

In another aspect, the present disclosure provides a power supply system. The power supply system can use three power supply devices to be configured into a three-phase-and-three-wired architecture (as shown in FIG. 7A) and a three-phase-and-four-wired architecture (as shown in FIG. 7B). As shown in FIGs. 7A and 7B, a power supply system 70 includes three power supply devices 71 and a controller 72. Each of the three power supply devices 71 includes two selectors 711, two inductors 712, and a full-bridge circuit 713. The two selectors 711 are selectively electrically connected to an AC port (e.g., one AC terminal TA is shown as an example here) or a DC port (e.g., two DC terminals BT+ and BT- are shown as an example here). The AC terminal TA and the two DC terminals BT+ and BT- can be configured with appropriate conductive lines to transmit AC or DC power. A first end of each of the two inductors 712 is electrically connected to one of the two selectors 711. The full-bridge circuit 713 includes two switch-series-connection portions. Each switch-series-connection portion is electrically connected in series with a second end of one of the two inductors 712. The full-bridge circuit 713 of each power supply device 71 is connected in parallel. The number of voltage regulation modules 714 in the power supply system 70 may be at least one, i.e., the power supply system 70 may have at least one voltage regulation module 714. For example, the three power supply devices 71 may be configured with one voltage regulation module 714 (as shown in FIG. 7A), two voltage regulation modules 714, or three voltage regulation modules (as shown in FIG. 7B). Examples are given below but are not limited to the description here.

For example, as shown in FIGs. 7A and 7B, at least one of the three power supply devices 71 is configured to be a voltage-regulated power supply device 71A. For example, the power supply system 70 may include a single voltage-regulated power supply device 71A (as shown in FIG. 7A) or a plurality of voltage-regulated power supply devices 71A (as shown in FIG. 7B). A voltage regulation module 714 (e.g., two switching elements S5 and S6 are taken as an example but not limited to the description here) is electrically connected between the second ends of the two inductors 712 of the voltage-regulated power supply device 71A. The controller 72 is electrically connected to the two selectors 711, the full-bridge circuit 713, and the voltage regulation module 714. The controller 72 is configured to control the two selectors 711 of the voltage-regulated power supply device 71A to be electrically connected to the two DC terminals BT+ and BT- of the DC port and to enable the voltage regulation module 714 of the voltage-regulated power supply device 71A to form a conductive path between the two inductors 712 according to an operation command instructing that the AC power is in an abnormal state.

In some embodiments, as shown in FIGs. 7A and 7B, each of the three power supply devices 71 includes a capacitor module 716, and the full-bridge circuit 713 is connected in parallel with the capacitor module 716. For example, the two switch assemblies 7131 of the full-bridge circuit 713 are connected in parallel with the capacitor module 716. The capacitor module 716 has a neutral point N, and the neutral points N of the three power supply devices 71 are electrically connected to each other. It should be understood that the selectors, the two inductors, the full-bridge circuit, the voltage regulation module, and the controller of the power supply system can be implemented using the selectors, the two inductors, the full-bridge circuit, the voltage regulation module, and the controller of the above power supply device embodiments.

In embodiments of the power supply system of the present disclosure, among the three power supply devices, the power supply device without the voltage regulation module can operate in the AC mode, and the voltage-regulated power supply device with the voltage regulation module can operate in the AC mode or the DC mode. The voltage-regulated power supply device operating in the DC mode can be used to increase the output voltage of other power supply devices or voltage-regulated power supply devices operating in the AC mode or can be used to charge the battery when other power supply devices or voltage-regulated power supply devices operating in the AC mode output a voltage. If multiple power supply systems are used to supply power together, they can be further used to power a large number of electronic equipment, such as servers or communication devices. For example, multiple power supply systems are suitable for powering communication modules, but they are not limited to the description here.

In another aspect, the present disclosure further provides a power supply method, which can be applied to embodiments of the above-mentioned power supply device, and the relevant description can be further adapted to embodiments of the above-mentioned power supply system. The power supply method includes configuring the controller to control the two selectors to be electrically connected to the two DC terminals of the DC port and to enable the voltage regulation module to form a conductive path between the two inductors according to an operation command indicating the AC power in a power abnormality state. Examples are given below but are not limited to the description here.

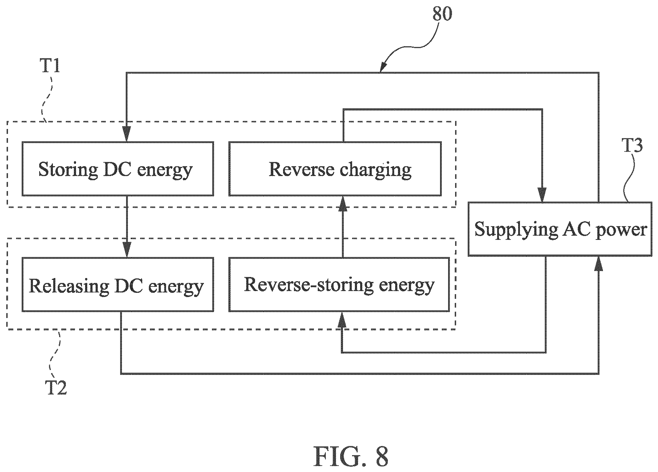

For example, as shown in FIGs. 2A and 8, an example 80 of the power supply method includes a step T1, according to the operation command indicating the AC power in the power abnormality state, configuring the controller 25 to control the two selectors 21 to be electrically connected to the two DC terminals BT+ and BT- and to enable the voltage regulation module 24 to form a conductive path between the two inductors 22. For example, configuring the controller 25 to control the two selectors 21 to be electrically connected the two DC terminals BT+ and BT-, configuring the controller 25 to control the voltage regulation module 24 to be in the conductive state between two ends thereof, and configuring the controller 25 to control the full-bridge circuit 23 to be in a disabled state (i.e., the switches S1 to S4 are turned off) so that the two DC terminals BT+ and BT-, the two inductors 22, and the voltage regulation module 24 collaboratively form a current path.

In some embodiments, the step T1, shown in FIG. 8 can be used in a DC energy storage mode. As shown in FIGs. 3A and 4A, the current flows from the DC terminal BT+ to the DC terminal BT- through one inductor 22 (such as L1), the voltage regulation module 24, and another inductor 22 (such as L2). The DC power from the battery is used to perform a DC energy storage process on the two inductors 22.

In some embodiments, the step T1, shown in FIG. 8, can be further used in a reverse charging mode. As shown in FIG. 5C, the current flows from the DC terminal BT- to the DC terminal BT+ through one inductor 22 (such as L2), the voltage regulation module 24, and another inductor 22 (such as L1). Electric energy released by the two inductors 22 is used to perform a reverse charge process on the battery electrically connected to the two DC terminals BT+ and BT-.

For example, as shown in FIGs. 2A and 8, the example 80 of the power supply method further includes a step T2, configuring the full-bridge circuit 23 and the capacitor module 26 to be connected in parallel, e.g., the two switch assemblies 231 of the full-bridge circuit 23 are connected in parallel to the capacitor module 26; configure the controller 25 to control the two selectors 21 to be electrically connected to the two DC terminals BT+ and BT- and to control the voltage regulation module 24 to be in the open-circuit state between the two ends thereof; configuring the controller 25 to control two selected switches (such as S1 and S4) between the capacitor module 26 and the two inductors 22 to be in the conductive state so that the two DC terminals BT+ and BT-, the two inductors 22, the selected switches (such as S1 and S4) and the capacitor modules 26 collaboratively form a current path.

In some embodiments, the step T2, shown in FIG. 8, can be used in the DC energy release mode. As shown in FIGs. 3B and 4B, the current flows from the DC terminal BT+ to the DC terminal BT- through one inductor 22 (such as L1), the switch S1, the two capacitors C1 and C2 of the capacitor module 26, the switch S4, and another inductor 22 (such as L2). The DC power from the battery and electric energy released by the two inductors 22 are used to perform a DC energy storage process on the capacitor module 26.

In some embodiments, the step T2, shown in FIG. 8, can be further used in a reverse energy storage mode. As shown in FIG. 5B, the current flows from the DC terminal BT- to the DC terminal BT+ through one inductor 22 (such as L2), the switch S4, the two capacitors C2 and C1 of the capacitor module 26, the switch S1, and another inductor 22 (such as L1). The electric energy released by the capacitor module 26 is used to perform a reverse charging process on the battery electrically connected to the two DC terminals BT+ and BT-.

For example, as shown in FIGs. 2A and 8, the example 80 of the power supply method further includes a step T3, according to an operation command indicating the AC power in a power restoration state or a preset power-supply state, configuring the full-bridge circuit 23 and the capacitor module 26 connected in parallel, such as the two switch assemblies 231 of the bridge circuit 23 being connected in parallel with the capacitor module 26 provided with two capacitors C1 and C2 and a neutral point N; configuring the controller 25 to control the two selectors 21 to be electrically connected to the AC terminal TA; configuring the controller 25 to control the voltage regulation module 24 to be in an open-circuit state between two ends thereof; configuring the controller 25 to control a specific switch (S1, S2) connected between the capacitor module 26 and one of the two inductors 22 (such as L1 or L2) to form a conductive state so that the AC terminal TA of the AC port, one of the two inductors 22 (such as L1 or L2), the specific switch (S1, S2, S3 or S4), one of the two capacitors (C1 or C2), and the neutral point N collaboratively form a current path.

In some embodiments, the step T3, shown in FIG. 8, can be used in a first AC power supply mode. As shown in FIG. 6A, the current flows from the utility power AC, through the inductor 22 (such as L1), the switch S2, the capacitor C2, and the neutral point N, and back to the utility power AC. The current from the utility power AC is used to perform an energy storage process on the inductor 22 (such as L1).

In some embodiments, the step T3, shown in FIG. 8, can be used in a second AC power supply mode. As shown in FIG. 6B, the current flows from the utility power AC, through the inductor 22 (such as L1), the switch S1, the capacitor C1, and the neutral point N, and back to the utility power AC. The current from the utility power AC and the current continuously provided by the inductor 22 (such as L1) are used to perform an electric energy release process on the capacitor C1.

In some embodiments, the step T3, shown in FIG. 8, can be used in a third AC power supply mode. As shown in FIG. 6C, the current flows from the utility power AC, through the inductor 22 (such as L2), the switch S4, the capacitor C2, and the neutral point N, and back to the utility power AC. The current from the utility power AC is used to perform an energy storage process on the inductor 22 (such as L2).

In some embodiments, the step T3, shown in FIG. 8, can be used in a fourth AC power supply mode. As shown in FIG. 6D, the current flows from the utility power AC, through the inductor 22 (such as L2), the switch S3, the capacitor C1, and the neutral point N, and back to the utility power AC. The current from the utility power AC and the current continuously provided by the inductor 22 (such as L2) are used to perform an electric energy release process on the capacitor C1.

In summary, the power supply device, system, and method of the present disclosure are provided, in which the first end of each of the two inductors is electrically connected to one of the two selectors, the two switch-series-connection portions of the full-bridge circuit are electrically connected to the second ends of the two inductors, the voltage regulation module is electrically connected between the second ends of the two inductors, and the controller is electrically connected to the two selectors, the voltage regulation module, and the full-bridge circuit, wherein the controller is configured to control the two selectors to be electrically connected to the DC port and to enable the voltage regulation module to form a conductive path between the two inductors according to the operation command indicating the AC power in the power abnormality state. Therefore, AC power is used to supply power when the utility power is normal, and backup DC power is provided when the utility power is abnormal. The two inductors store electric energy first and then release electric energy, which can increase the output voltage and charge the battery in reverse. Thus, in addition to supplying power uninterruptedly, using the same circuit to convert AC or DC power into a power source can also effectively reduce the number of components used in the circuit.

Although the present disclosure has been disclosed in the preferred embodiments, any person skilled in the art can make various changes and modifications without departing from the spirit and scope of the present disclosure. Therefore, the protection scope of the present disclosure shall be determined by the appended claims.

## Claims

1. A power supply device (20), **characterized in that** the power supply device comprises:
two selectors (21) selectively electrically connected to an alternative current (AC) port or a direct current (DC) port to transmit AC power or DC power;
two inductors (22), wherein a first end of each of the two inductors (22) is electrically connected to one of the two selectors (21);
a full-bridge circuit (23) comprising two switch-series-connection portions (231a), each switch-series-connection portion (231a) is electrically connected to a second end of one of the two inductors (22);
a voltage regulation module (24) electrically connected between the second ends of the two inductors (22); and
a controller (25) electrically connected to the two selectors (21), the full-bridge circuit (23), and the voltage regulation module (24), wherein the controller (25) is configured to control the two selectors (21) to be electrically connected to the DC port and to enable the voltage regulation module (24) to form a conductive path between the two inductors (22) according to an operation command indicating the AC power in a power abnormality state.

2. The power supply device as claimed in claim 1, **characterized in that** the voltage regulation module (24) comprises a switching element (S5) that is electrically connected between the two inductors (22), and the controller (25) is configured to control the switching element (S5) to form the conductive path between the two inductors (22).

3. The power supply device as claimed in claim 1, **characterized in that** the voltage regulation module (24) comprises a switching element (S5) and a unidirectional element (D1) that are connected in series between the two inductors (22), and the controller (25) is configured to control the switching element (S5) to form the conductive path between the two inductors (22).

4. The power supply device as claimed in claim 1, **characterized in that** the voltage regulation module (24) comprises two switching elements (S5, S6) that are connected in series between the two inductors (22), and the controller (25) is configured to control the two switching elements (S5, S6) to form the conductive path between the two inductors (22).

5. The power supply device as claimed in claim 1, **characterized in that** each of the two selectors (21) has a first terminal (21a), a second terminal (21b), a third terminal (21c), and a selection terminal (21d), and the first terminal (21a) of each of the two selectors (21) is electrically connected to the AC port, the second terminal (21b) of each of the two selectors (21) is electrically connected to the DC port, the third terminal (21c) of each of the two selectors (21) is electrically connected to one of the two inductors (22), and the selection terminal (21d) of each of the two selectors (21) is electrically connected to the controller (25).

6. The power supply device as claimed in claim 5, **characterized in that** the AC port has an AC terminal (TA), the DC port has two DC terminals (BT+, BT-), each of the two selectors (21) comprises two switching units (211), each of the two switching units (211) has an input terminal, an output terminal, and a control terminal, the input terminal of each of the two switching units (211) is electrically connected to the AC terminal (TA) and one of the two DC terminals (BT+, BT-), the output terminals of the two switching units (211) are jointly electrically connected to one of the two inductors (22), and the control terminals of the two switching units (211) are electrically connected to the controller (25) in an invert-phased manner.

7. The power supply device as claimed in claim 6, **characterized in that** each of the two switching units (211) is a relay or a silicon-controlled rectifier.

8. The power supply device as claimed in claim 1, **characterized in that** the DC port is electrically connected to a battery, the full-bridge circuit (23) is connected in parallel with a capacitor module (26), each of the battery and the capacitor module (26) has a neutral point (N), and the neutral point (N) of the battery is electrically connected to the neutral point (N) of the capacitor module (26).

9. The power supply device as claimed in claim 1, **characterized in that** the controller (25) is configured to control the two selectors (21) to be electrically connected to the DC port, and the controller (25) is configured to enable the voltage regulation module (24) to be in a conductive state between two ends thereof and to control the full-bridge circuit (23) to be in a disabled state, to make the DC port, the two inductors (22), and the voltage regulation module (24) collaboratively form a current path.

10. The power supply device as claimed in claim 1, **characterized in that** the full-bridge circuit (23) is connected in parallel with a capacitor module (26), the controller (25) is configured to control the two selectors (21) to be electrically connected to the DC port, the controller (25) is configured to control the voltage regulation module (24) to be in an open-circuit state between two ends thereof and to control two selected switches connected between the capacitor module (26) and the two inductors (22) to be a conductive state, to make the DC port, the two inductors (22), the two selected switches, and the capacitor module (26) collaboratively form a current path.

11. The power supply device as described in claim 1, **characterized in that** the full-bridge circuit (23) is connected in parallel with a capacitor module (26) that is provided with two capacitors (C1, C2) and a neutral point (N), and wherein the controller (25) is configured to control the two selectors (21) to be electrically connected to the AC port, to control the voltage regulation module (24) to be in an open-circuit state between the two ends, and to control a specific switch connected between the capacitor module (26) and one of the two inductors (22) to be in a conductive state, to make the AC port, one of the two inductors (22), the specific switch, one of the two capacitors (C1, C2), and the neutral point (N) collaboratively form a current path, according to the operation command instructing the AC power in a power restoration state.

12. A power supply method (80), **characterized in that** the power supply method is applied to a power supply device (20) that comprises two selectors (21), two inductors (22), a full-bridge circuit (23), a voltage regulation module (24), and a controller (25), wherein the two selectors (21) are selectively electrically connected to an alternative current (AC) port or a direct current (DC) port to transmit AC power or DC power, a first end of each of the two inductors (22) is electrically connected to one of the two selectors (21), the full-bridge circuit (23) comprises two switch-series-connection portions (231a), each switch-series-connection portion (231a) is electrically connected to a second end of one of the two inductors (22), the voltage regulation module (24) is electrically connected between the second ends of the two inductors (22), and the controller (25) is electrically connected to the two selectors (21), the full-bridge circuit (23), and the voltage regulation module (24), wherein the power supply method comprises:
configuring (T1) the controller (25) to control the two selectors (21) to be electrically connected to the DC port and to enable the voltage regulation module (24) to form a conductive path between the two inductors (22) according to an operation command indicating the AC power in a power abnormality state.

13. The power supply method (80) as claimed in claim 12, **characterized in that** the configuring (T1) the controller to control the two selectors (21) to be electrically connected to the DC port and to enable the voltage regulation module (24) to form the conductive path between the two inductors (22) according to the operation command indicating the AC power in the power abnormality state comprises:
configuring the controller (25) to control the two selectors (21) to be electrically connected to the DC port;
configuring the controller (25) to enable the voltage regulation module (24) to be in a conductive state between two ends thereof, and
configuring the controller (25) to control the full-bridge circuit (23) to be in a disabled state, to make the DC port, the two inductors (22), and the voltage regulation module (24) collaboratively form a current path.

14. The power supply method as described in claim12, **characterized in that** the power supply method further comprises:
configuring (T2) the full-bridge circuit (23) to be connected in parallel with a capacitor module (26);
configuring the controller (25) to control the two selectors (21) to be electrically connected to the DC port, and
configuring the controller (25) to control two selected switches connected between the capacitor module (26) and the two inductors (22) to be a conductive state, to make the DC port, the two inductors (22), the two selected switches, and the capacitor module (26) collaboratively form a current path.

15. The power supply method (80) as described in claim 12, **characterized in that** the power supply method further comprises:
configuring (T3) the full-bridge circuit (23) to be connected in parallel with a capacitor module (26);
configuring the capacitor module (26) to be provided with two capacitors (C1, C2) and a neutral point (N), and
configuring the controller (25) to control the two selectors (21) to be electrically connected to the AC port, to control the voltage regulation module (24) to be in an open-circuit state between the two ends, and to control a specific switch connected between the capacitor module (26) and one of the two inductors (22) to be in a conductive state, to make the AC port, one of the two inductors (22), the specific switch, one of the two capacitors (C1, C2), and the neutral point (N) collaboratively form a current path, according to the operation command instructing the AC power in a power restoration state.
